# NEUE EUROPÄISCHE PATENTSCHRIFT

(11) **EP 1 981 622 B2**
(45) Veröffentlichungstag und Bekanntmachung des Hinweises auf die Entscheidung über den Einspruch: **17.08.2016**
(45) Hinweis auf die Patenterteilung: 23.12.2009
(21) Anmeldenummer: 07722772.6
(22) Anmeldetag: 26.01.2007
(51) Int. Cl.: B01F 3/02, B01F 3/04, B01F 5/04, B01F 5/06, B01F 15/00, B01D 53/34, B01D 53/76, F23J 15/00

(54) **VERFAHREN UND VORRICHTUNG ZUM VERMISCHEN EINES GASFÖRMIGEN FLUIDS MIT EINEM GROSSEN GASMENGENSTROM, INSBESONDERE ZUM EINBRINGEN EINES REDUKTIONSMITTELS IN EIN STICKOXIDE ENTHALTENDES RAUCHGAS**
PROCESS AND DEVICE FOR MIXING A GASEOUS FLUID WITH A LARGE FLOW-RATE GAS STREAM, IN PARTICULAR FOR INTRODUCING A REDUCING AGENT INTO FLUE GAS CONTAINING NITROGEN OXIDES
PROCÉDÉ ET DISPOSITIF POUR MÉLANGER UN FLUIDE GAZEUX À UN FLUX GAZEUX IMPORTANT, NOTAMMENT POUR INTRODUIRE UN AGENT RÉDUCTEUR DANS UN GAZ DE COMBUSTION CONTENANT DES OXYDES D'AZOTE

(30) Priorität: 28.01.2006 DE 102006004068
(43) Veröffentlichungstag der Anmeldung: 22.10.2008
(73) Patentinhaber: FISIA Babcock Environment GmbH, 51643 Gummersbach (DE)
(72) Erfinder: BECKMANN, Gerd, 51653 Gummersbach (DE); ENGELKING, Wolfram, 51674 Wiehl (DE); PRIESMEIER, Ulrich, 51643 Gummersbach (DE)
(74) Vertreter: Wagner & Geyer
(86) Internationale Anmeldenummer: PCT/EP2007/000689
(87) Internationale Veröffentlichungsnummer: WO 2007/085472

(56) Entgegenhaltungen:
- EP-A- 0 956 895
- EP-A- 1 568 410
- EP-A- 1 604 742
- EP-A1- 1 166 861
- DE-A1- 2 325 118
- DE-A1- 10 129 367
- DE-A1- 19 962 616
- DE-U1- 9 321 122
- US-A- 4 812 049
- US-A1- 2005 189 026

## Beschreibung

Die Erfindung betrifft ein Verfahren zum Vermischen mindestens eines Fluidstroms mit einem großen Gasmengenstrom, insbesondere zum Einbringen eines Reduktionsmittels in ein Stickoxide enthaltendes Rauchgas, gemäß dem Oberbegriff des Anspruchs 1 sowie eine Vorrichtung zum Vermischen mindestens eines Fluidstroms mit einem in einem Gaskanal strömenden großen Gasmengenstrom, insbesondere zum Einbringen eines Reduktionsmittels in ein Stickoxide enthaltendes Rauchgas, gemäß dem Oberbegriff des Anspruchs 4.

Aus der EP 1 604 742 A1 ist ein solches Verfahren im Zusammenhang mit Elektrofiltern zur Entstaubung großer Gasmengenströme bekannt, bei dem die sich an der geneigten Mischerscheibe ausbildenden Strömungswirbel als Vorderkantenwirbel bezeichnet werden. Die gegen den großen Gasmengenstrom gerichtete Kante der vorzugsweise kreisförmigen Scheibe ist als Abströmkante und die andere Kante als Abrißkante bezeichnet. Es handelt sich dabei nicht um geradlinige Kanten, sondern um bogenförmige Kanten.

Die vertikale Wandung des den großen Gasmengenstrom führenden Gaskanals ist von einem Rohrstutzen für die Zumischung eines Konditionierfluids senkrecht durchsetzt. Der Rohrstutzen mündet in Strömungsrichtung des großen Gasmengenstroms gesehen hinter der Anströmkante der Mischerscheibe ohne die Mischerscheibe zu überlappen. Der aus dem Rohrstutzen austretende laminare Konditioniermittelstrom trifft auf die dem Stutzenaustritt benachtbarte randständige Teilflache der Abströmseite der Mischerscheibe unter einem Winkel auf, der dem Neigungswinkel der Scheibe zu Strömungsrichtung des großen Gasmengenstroms entspricht.

Bei dieser Verfahrensführung wird das Konditioniermittel nicht in optimaler Weise in das an der Mischerscheibe entstehende Wirbelsystem eingemischt

In Sp.6, Z.5-6 der EP 1 604 742 A1 werden auch Verfahrensweisen für zweckmäßig gehalten, bei denen die Zumischeinrichtung unmittelbar an der Wirbelvorrichtung angebracht sind.

In der US 5 356 213 A wird in Zusammenhang mit einem Gasphasenoxidations - Verfahren auf dem Gebiet der Petrochemie ein Verfahren zum Vermischen eines kleinen Gasstroms, z.B. Sauerstoff, mit einem großen Gasmengenstrom, z. B. Luft beschrieben, bei dem der Sauerstoff in mindestens zwei verdrallten Teilströmen über am Ende eines sich in Strömungsrichtung der Luft öffnenden Rohrabschnitts angeordnete, sich radial erstreckende Drallschaufeln in den im wesentlichen ungestört in einem Kanal strömenden Luftstrom eingeführt wird, wobei die Geschwindigkeit des Sauerstoffs stromauf der Drallschaufeln erhöht wird und stromab der Drallschaufeln über das Austrittsende des Rohrabschnitts ein Tuch gespannt ist.

Bei der in der EP 1 166 861 in Zusammenhang mit Denox - Anlagen und Elektrofiltern beschriebenen Mischvorrichtung weist die Mischerscheibe (Einbaufläche) eine Kammer auf, in die ein seperater Strömungskanal für das einzumischende Fluid führt und die als Verteilerkammer für den Fluidstrom dient Die Kammer ist auf der der Zuströmung des großen Gasmengenstroms abgewandten Rückseite (Abströmseite; Lee- Seite) der Mischerscheibe mit Austrittsöffnungen versehen, aus denen Teilströme des Fluidstroms laminar austreten, und im Bereich der Anströmkante angeordnet An die Verteilerkammer schließen sich zu Abrißkante hin Kammern an, die jedoch keine Verteilerfunktion oder strömungstechnische Funktion haben, sondern ausschließlich der Versteifung der Mischerscheibe dienen. Die Austrittsöffnungen können im Deckel der Verteilerkammer oder in deren Seitenwandung ausgebildet sein. Sie können aber auch in einer auf die Kammer aufgesetzten zusätzlichen Haube ausgebildet sein. Es ist aber auch möglich, dass die Kammer selbst nicht mit einem zur Mischerscheibe parallelen Deckel ausgerüstet ist, sondern selbst haubenförmig gestaltet ist. Der Strömungskanal für die Zufuhr von Fluid kann von der Luv - Seite der Mischerscheibe durch die Scheibe hindurch in die Kammer eintreten oder auf der Lee - Seite der Mischerscheibe zu der Verteilerkammer hingeführt sein. Bei dem in der EP 1 166 861 beschriebenen Verfahren ist eine zusätzliche Kammer erforderlich und die Einmischung erfolgt wiederum nur in der Nähe der Anströmkante.

Solche als Mischverfahren mit einem statischen Mischer bezeichneten Verfahren werden z. B. auch bei SCR-Anlagen zur Entstickung (Selektive Catalytische Reduktion) von Rauchgasen z.B. von Kraftwerksfeuerungen mittels Reduktionsmittel und Katalysator eingesetzt. Dabei ist es üblich, dass im Fall von NH3 als Reduktionsmittel dieses in Form von druckverflüssigtem NH3 oder von Ammoniakwasser (NH40H) gelagert und vorverdampftes NH3 mit einem Traggasstrom in den Rauchgasstrom eingedüst und mit diesem vermischt wird. Im Fall von Harnstoff als Reduktionsmittel wird zunächst eine wässrige Harnstofflösung erzeugt, die nach geeigneter Aufarbeitung dann ebenfalls gasförmig in den Rauchgasstrom eingedüst wird.

Weiterhin werden sie beispielsweise eingesetzt bei der Beaufschlagung von Industrieschomsteinen, von Sprühtrocknern (vgl. z.B.EP 0637 726 B1), von Wärmetauschern, von Rauchgasentschwefelungsanlagen und von Hybridkühftürmen.

Aus der DE-A1-101 29 367 ist ein Verfahren zur Befeuchtung von Luft bekannt, bei der zu befeuchtenden Luftstrom eine Vielzahl von unter einem Winkel gegen seine Strömungsrichtung angeordneten scheibenartig ausgebildeten Turbulenzflügel auf deren Anströmseite anströmt, an denen sich Strömungswirbel ausbilden. Stromab der von den Turbulenzflügeln gebildeten Luftverwirbelungsstufe ist in vorgegebenen Abstand eine Düsenstufe angeordnet Diese Düsenstufe wirf wird von einer Vielzahl von Dralldüsen gebildet, von denen jede jeweils einem Turbulenzflügel zugeordnet ist. Der die Düsen verlassende Drallstrahl trifft weder auf die Anströmseite noch auf die Abströmseite des Turbulenzflügels, sondern ist von dem Turbulenzflügel abgewandt. Eine direkte Einmischung in die sich an den Turbulenzflügeln gebildeten Wirbel erfolgt nicht. Weitere Vorrichtungen zum Vermischen von Fluidströmen sind aus der DE-A- 2 325 118 und der US-A-4 812 049 bekannt.

Es ist die Aufgabe der Erfindung, beim gattungsgemäßen Verfahren und bei der gattungsgemäßen Vorrichtung die Einmischung des Fluidstroms in den großen Gasmengenstrom zu verbessern.

Diese Aufgabe wird durch ein Verfahren gemäß Anspruch 1 und eine Vorrichtung gemäß Anspruch 4 gelöst. Weitere Ausgestaltungen sind Gegenstand der Unteransprüche.

Besonders hierbei ist, dass der Fluidstrom als verdrallter Strom zugemischt wird. Es ist dabei vorgesehen, dass der verdrallte Fluidstrom auf einer Seite im wesentlichen senkrecht auf das Mischerelement und im wesentlichen auf die Mitte des Mischerelements gelenkt wird, dass der Fluidstrom auf die Abströmseite des Mischerelements gelenkt wird oder der Fluidstrom auf die Anströmseite des Mischerelement mit einer im wesentlichen auf der Mitte des Mischerelements vorgesehenen Öffnung gelenkt wird, durch die der Fluidstrom auf die Abströmseite (1b) des Mischerelements austritt, und dass das Fluid von der Mitte her entlang der Abströmseite in die Strömungswirbel eintritt.

Beim Drallstrahl erzeugt die Fliehkraft einen Unterdruck auf der Strahlachse und formt einen nach außen strebenden Hohlstrahl, der bei geeigneter Auslegung der Mündung des Zufuhrrohrs (Radius, glatter Übergang) der Krümmung der Wandung am Austritt folgt (Coanda-Effekt) und sich bis hin zum Flachstrahl öffnet.

Bei beiden Varianten entsteht auf der Lee- Seite wegen der senkrechten Ausrichtung ein rotationssymmetrischer Flachstrahl, der sich parallel zur Oberfläche des Mischerelements erstreckt und sich im wesentlichen radial ausbreitet. Bei verdrallter Zuströmung weist die Geschwindigkeit des Flachstrahls neben der Radialkomponente auch eine Umfangskomponente auf. Die Umfangskomponente ist innerhalb des Austritts (Düse) am größten und nimmt mit zunehmenden radialem Abstand vom Austritt ab.

Die Mitte befindet sich im Falle der Kreisscheibe im Kreismittelpunkt bzw. bei einem regelmäßigen Vieleck im Flächenschwerpunkt. Bei einem Mischerelement mit Abweichungen von der regelmäßigen Form wie z.B. bei einem ungleichschenkligen Dreieck, Trapez oder ähnlichem ist eine Anpassung der Austrittsposition (Düsenposition) erforderlich, um trotzdem eine weitgehend gleichmäßige Verteilung des Fluids über die Abströmseite des scheibenförmigen Mischerelements zu erreichen.

Bei beiden Verfahrensführungen wird erreicht, dass das Fluid über die gesamte Abströmseite des Mischerelements verteilt wird und in das gesamte sich an der umlaufenden Kante ausbildende Wirbelsystem eingetragen wird.

Bei der erfindungsgemäßen Vorrichtung ist zur Verbesserung des Mischvorgangs vorgesehen, dass der gerundet ausgebildete Fluidaustritt der Zumischeinrichtung im wesentlichen senkrecht zu einer Seite und im wesentlichen auf die Mitte des Mischerelements ausgerichtet ist und dass der Fluidaustritt auf der Abströmseite des Mischerelements angeordnet ist oder der Fluidaustritt der Zumischeinrichtung auf der Anströmseite des Mischerelements angeordnet ist und einer im wesentlichen mittigen Öffnung des Mischerelement zugeordnet ist, aus der der verdrallte Fluidstrom zur Abströmseite hin austritt.

Einsetzbare Dralleinrichlungen sind z.B. in der Verbrennungstecknik bekannt.

Vorzugsweise ist die Mischerscheibe kreisförmig, elliptisch, oval, parabelförmig, rautenförmig oder dreieckförmig ausgebildet, wie dies aus der DE 37 23 618C1, Sp.2, Z. 40 - 45 bekannt ist. Eine vieleckige Ausbildung, z. B. 8-eckige , ist auch möglich. Besonders bevorzugt wird die Form eines symmetrisch strukturierten 8-Ecks,weiter bevorzugt regelmäßigen 8-Ecks. Auch ein Vieleck in Form eines Trapezes ist besonders geeignet.

Die Mischerscheibe ist vorzugsweise unter einem Winkel im Bereich zwischen 30° bis 90° zur Strömungsrichtung des Gasmengenstroms geneigt.

Um einen Staubeintrag durch Rückströmung in die Zufuhreinrichtung zu beschränken, ist zweckmäßiger Weise vor oder in der Öffnung in dem Mischerelement eine Staubschutzplatte angeordnet.

Vorzugsweise ist Dralleinrichtung in dem Zufuhrrohr der Zumischeinrichtung angordnet oder dem Zufuhrrohr vorgeschaltet.

Die Dralleinrichtung ist vorzugsweise ausgewählt aus der Gruppe: Drallerzeuger mit Radialgitter, Drallerzeuger mit Axialgitter, Drallerzeuger mit tangentialem Zustrom.

Die Erfindung wird nachstehend beispielsweise anhand der Figuren näher erläutert. Es zeigt:
- Fig. 1: eine dreidimensionale Darstellung eines sich an einer von einem Gasmengenstrom angeströmten und gegen den Strom unter einem Winkel α geneigten kreisförmigen Scheibe einstellenden Hufeisenwirbels mit Wirbelschleppe,
- Fig.2: eine Seitenansicht quer zur Linie A - A gemäß Fig. 1,
- Fig.3: eine Vorderansicht mit Blick auf die Lee-Seite der Scheibe quer zur Linie B - B in der Darstellung gemäß Fig. 1,
- Fig.4: einen Teilschnitt / Seitenansicht vergleichbar Fig.2 einer ersten Ausführungsform der erfindungsgemäßen Vorrichtung mit 8-eckiger Mischerscheibe, bei der der verdrallte Fluidstrom auf die Anströmseite (Luv - Seite) der Mischerscheibe gelenkt und durch eine Öffnung in der Mischerscheibe zur Abströmseite austritt,
- Fig. 5: eine perspektivische Darstellung der Vorrichtung nach Fig.4 mit Blick auf die Abströmseite der Mischerscheibe,
- Fig.6: einen Teilschnitt / Seitenansicht vergleichbar Fig. 4 einer zweiten Ausführungsform der erfindungsgemäßen Vorrichtung, bei der der verdrallte Fluidstrom mittig auf die Abströmseite der Mischerscheibe gelenkt wird,
- Fig.7: einen Teilschnitt / Seitenansicht entsprechend Fig.4 mit einem Staubschutzplatte als Rückströmsperreinbau,
- Fig. 8: einen Vertikalschnitt durch eine als Radialgitter ausgebildete Dralleinrichtung,
- Fig.9: einen Horizontalschnitt durch das Radialgitter gemäß Fig. 8,
- Fig.: 10 einen Vertikalschnitt durch eine als Axialgitter ausgebildete Dralleinrichtung,
- Fig.: 11 einen Horizontalschnitt durch das Axialgitter gemäß Fig. 10,
- Fig.: 12 einen Vertikalschnitt durch eine Dralleinrichtung mit Spiralgehäuse,
- Fig.: 13 einen Horizontalschnitt durch die Dralleinrichtung gemäß Fig. 12 und
- Fig.: 14 eine Dralleinrichtungsbaugruppe mit mehreren Radialgittern.

Bei der Ausbildung von Wirbelschleppen handelt es sich um ein natürliches Phänomen in dreidimensionalen Strömungen an einem Körper, (vgl. Prandtl, Oswatitsch, Wieghardt : Führer durch die Strömungslehre, 9. Auflage 1990; ISBN 3-528-28209-6, S. 229, Bild 4.41 und zugehörige Beschreibung).

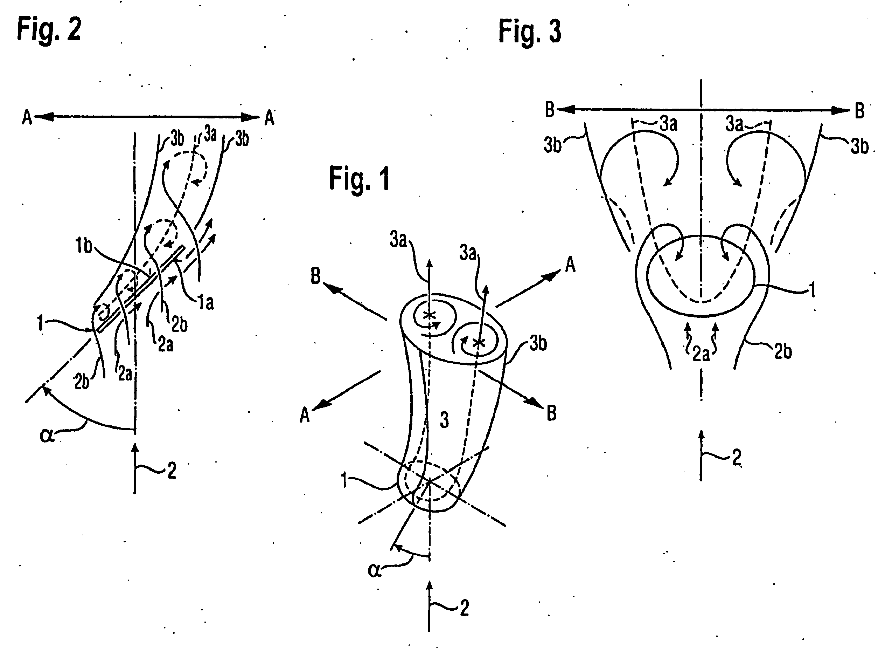

Die Entstehung, die Form und Lage solcher Wirbelschleppen im Abstrom von Mischerscheiben sollen zunächst in den Fig. 1 - 3 schematisch dargestellt und an ihnen beschrieben werden.

Eine kreisförmige Scheibe 1 ist im Winkel a gegen den in der Fig.1 von unten kommenden strömenden Gasmengenstrom 2 geneigt. Auf der Luv-Seite 1 a der Scheibe wird der Gasmengenstrom aus seiner Hauptströmungsrichtung abgelenkt und es entsteht ein Überdruckgebiet Der Teilstrom 2a des Gasmengenstroms 2 strömt mit vorgegebenem Winkel unter der Scheibe entlang. Auf der Lee-Seite 1 b der Scheibe bildet sich ein Unterdruckgebiet, das von dem Teilstrom 2b des Gasmengenstroms über den Rand der Scheibe aufgefüllt wird. Durch die Strömungsumlenkung am Rand der Scheibe bildet sich ein Hufeisenwirbel 3 mit der gestrichelt dargestellten Wirbelachse 3a, dersich in Form einer Wirbelschleppe mit zwei symmetrisch rotierenden Wirbeln stromab der Scheibe fortsetzt Die seitlichen Wirbel des Hufeisenwirbels setzen sich als Wirbelschleppe fort, überlagern sich mit dem Gasmengenstrom (Grundströmung) und breiten sich mit der Grundströmung aus. Der Strömungszustand innerhalb der Wirbelschleppe ist hoch turbulent. Die schematisch dargestellte Grenze 3b von Hufeisenwirbel und Wirbelschleppe darf nicht als scharfe Abgrenzung verstanden werden. Die Lage und die Struktur sowie die gegenläufigen Drehrichtungen der beiden Wirbel können mit geeigneter Meßtechnik experimentell bestimmt werden.

Bei anderen Scheibenformen wie Ellipsenform, Ovalform, Parabelform, Rautenform, Vieleck- oder Dreiecksform bilden sich vergleichbare Wirbel mit Wirbelschleppen aus. Die turbulente Durchmischung von Wirbelschleppen und Gasmengenstrom wird genutzt, um einen nahezu punktuell eingebrachten Gasstrom gleichmäßig über einen sehr großen Querschnitt zu verteilen.

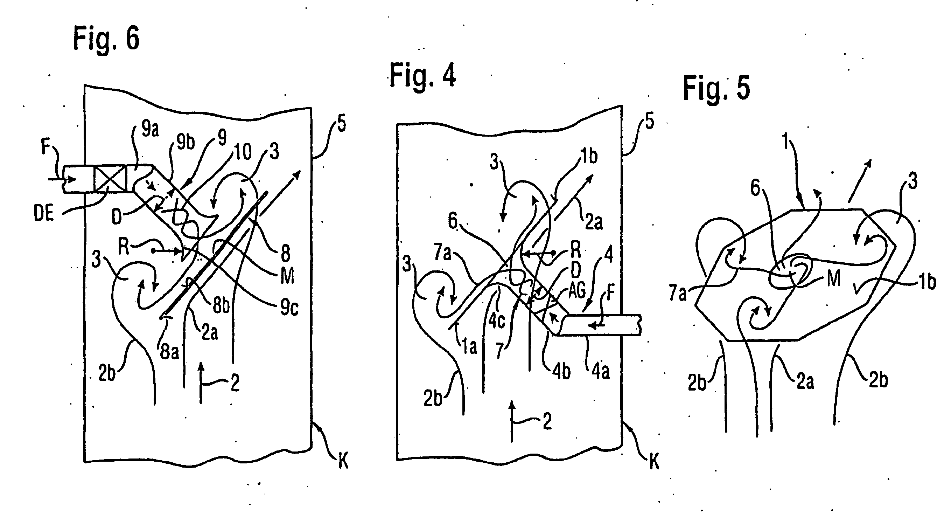

Bei der Ausführungsform der erfindungsgemäßen Vorrichtung gemäß Fig. 4 und 5 durchsetzt ein der Zufuhr des einzumischenden Fluids F dienendes Zufuhrrohr 4 mit einem geraden Abschnitt 4a die Wandung 5 eines den großen Gasmengenstrom 2 führenden Kanal K, in dem eine 8-eckige Mischerscheibe 1 geneigt angeordnet ist. An den Rohrabschnitt 4a schließt sich ein abgewinkelter Rohrabschnitt 4b an, der senkrecht auf die Mitte M der Luv-Seite 1 a der Mischerscheibe 1 ausgerichtet ist In der Mitte M der Scheibe ist eine Öffnung 6 vorgesehen.

Wie in der Fig. 4 schematisch angedeutet, ist in dem Rohrabschnitt 4a eine Dralleinrichtung DE in Form eines Axialgitters AG angeordnet und somit dem Austritt 4c des Rohrs vorgeschaltet

Das Axialgitter AG und weitere Beispiele für mögliche Dralleinrichtungen werden ab S.8, 7. Absatz beschrieben.

Das Austrittsende des abgewinkelten Rohrabschnitts 4b ist mit einem Austritt 4c versehen, der mit einem vorgegebenen Radius R ausgerundet ist, d.h. stetig aufgeweitet ist, und auf die Öffnung 6 ausgerichtet ist und mit der Scheibe verbunden ist. Der Ausrundungsradius R ist vorzugsweise R = D/2 mit D als Rohrdurchmesser.

Der aus dem Austritt 4c austretende verdrallte Fluidstrom 7 wird unter Einfluß des Dralls über die Abströmseite verteilt, wie es durch die Pfeile 7a in der Fig. 5 schematisch dargestellt ist. Im Bereich der umlaufenden Kante der Mischerscheibe erfolgt die Einmischung in die Strömungswirbel 3.

Bei der Ausführungsform der erfindungsgemäßen Vorrichtung gemäß Fig. 6 mit 8-eckiger Mischerscheibe 8 durchsetzt ein Zufuhrrohr 9 mit einem geraden Abschnitt 9a die Wandung 5 eines den großen Gasmengenstrom 2 führenden Kanals K, in dem kreisförmiger Mischerscheibe 8 geneigt angeordnet ist. An den Rohrabschnitt 9a schließt sich ein abgewinkelter Rohrabschnitt 9b an, der senkrecht auf die Mitte M der Lee-Seite 8b der Mischerscheibe 8 ausgerichtet ist und an seinem Austrittsende einen ausgerundeten Austritt 9c aufweist. Der Austritt 9c ist mit Abstand von der Abströmseite 8b (Lee - Seite) der Mischerscheibe 8 angeordnet In dem Rohrabschnitt 9a ist eine Dralleinrichtung DE vorgesehen.

Die Einschaltung in oder Zuordnung der Dralleinrichtung DE zu dem abgewinkelten Abschnitt - wie bei der Ausführungsform gemäß den Fig. 4 und 5 - wird aber bevorzugt, da dann der verdralte Strom ohne weitere Umlenkung im Rohr aus dem Austritt austreten kann.

Der aus dem Austritt 9c austretende verdrallte Fluidstrom 10 wird über die Abströmseite 8b verteilt, wie es entsprechend für den Fluidstrom 7 durch die Pfeile 7a in der Fig.5 schematisch dargestellt ist. Im Bereich der umlaufenden Kante der Mischerscheibe 8 erfolgt die Einmischung in die Strömungswirbel 3.

Die Rohre 4 und 10 müssen im Kanal K nicht unbedingt abgewinkelt sein; das Fluid muß nur der Mischerscheibe senkrecht zugeführt werden, d.h. eine schräge Rohrdurchführung durch die Kanalwand 5 wäre auch denkbar. Es ist auch denkbar, dass mindestens ein weiterer Rohrabschnitt parallel zur Kanalwandung verläuft.

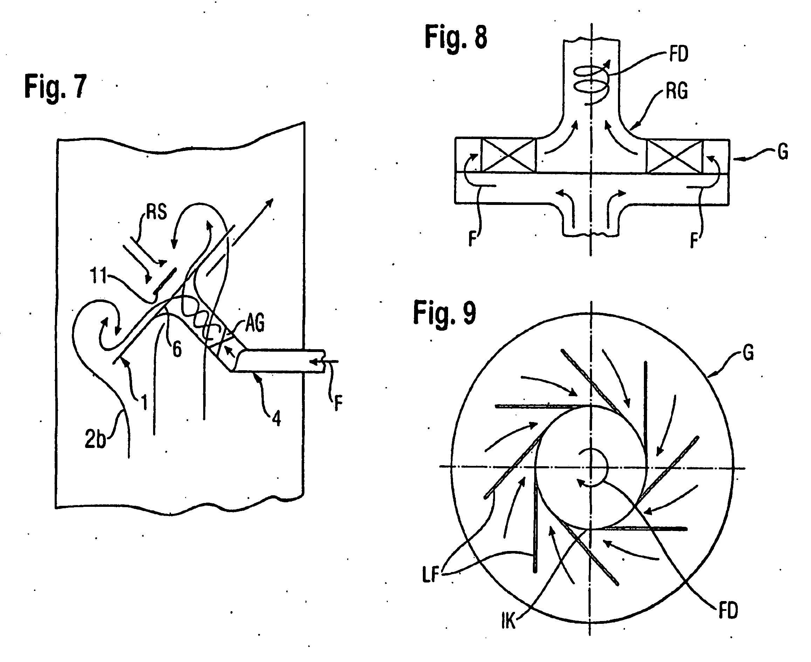

Wie die Fig. 7 zeigt kann der Öffnung 6 eine Staubschutzplatte 11 zugeordnet sein. Wenn der Drallstrahl in einer staubhaltigen Umgebung eingesetzt wird, kann Staub mit der sich auf der Strahlachse bildenden Rückströmung RS zurück in das Zufuhrrohr 4 gelangen. Durch die Fliehkraft wandert der Staub möglicherweise teilweise an die Rohrwand und könnte dort zu Belägen führen. Die Staubschutzplatte 11 kann dies verhindern.

Es ist selbstverständlich, dass bei großen Kanalquerschnitten mehrere Mischerscheiben mit zugeordneter Fluidzufuhr über den Kanalquerschnitt verteilt in einer Ebene oder gestaffelt vorgesehen sein können.

Im folgenden sollen Beispiele für mögliche Dralleinrichtungen beschrieben werden:

Bei Brennern wird häufig einem Verbrennungsluftstrom eine Umfangskomponente aufgeprägt, um die Flamme radial aufzuweiten. Diese Aufweitung kann soweit geführt werden, dass die Flamme aufplatzt und sich als sogenannte Flachflamme an die Brennkammerwand anlegt. Typisch für verdrallte Brennerströmungen ist ein Unterdruckgebiet, das bewußt zur Flammenstabilisierung genutzt wird.

Es sind beispielsweise folgende Techniken bekannt

Bei Drallerzeugung mit einem Radialgitter RG gemäß Fig. 8 und 9 sind in einem Gehäuse G mehrere Leitflächen LF tangential zu einem Innenkreis IK angeordnet. Der verdrallte Fluidstrom FD wird mittig abgezogen.

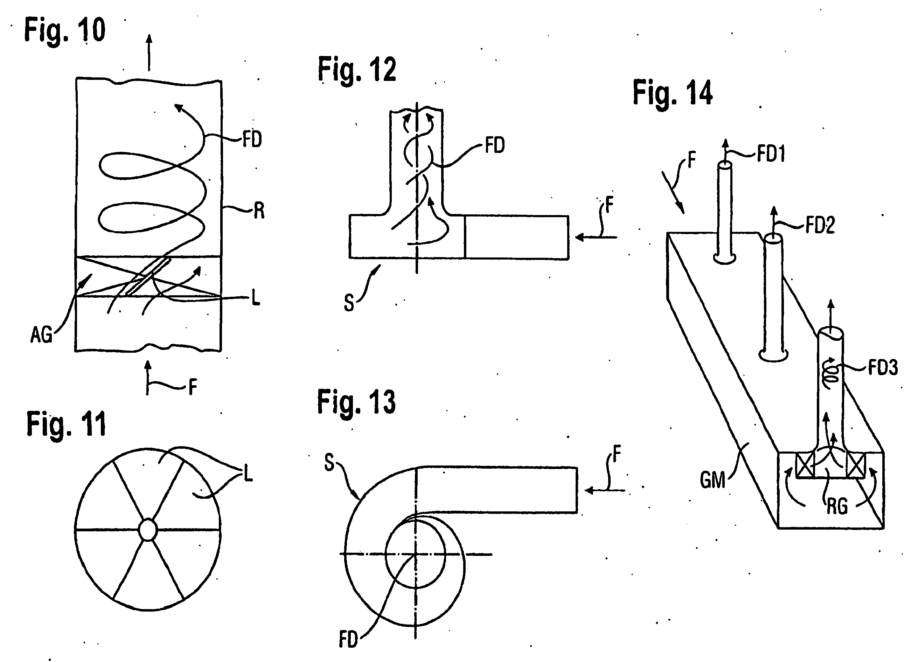

Bei Drallerzeugung mit einem Axialgitter AG gemäß Fig. 10 und 11 tritt der Fluidstrom F in das aus mehreren schräg angestellten und radial in einem Rohr R angordneten Leitschaufeln L aufgebaute Axialgitter AG ein und wird in ihm zum Strom FD verdrallt.

Bei Drallerzeugung mit tangentialer Zuströmung wird gemäß Fig. 12 und 13 der Fluidstrom Fin ein Spiralgehäuse S eingeleitet und verläßt dies mittig als verdrallter Strom FD. Das Spiralgehäuse dient als Leitfläche, so daß keine Leitschaufeln erforderlich sind.

Die Fig. 14 zeigt, dass mehrere Dralleinrichtungen wie z.B. Radialgitter in einer Baugruppe zusammengefaßt werden können, falls mehreren Mischerscheiben ein verdrallter Fluidstrom zuzuführen ist. In einem gemeinsamen Gehäuse GM sind mehrere Radialgitter RG angeordnet und es werden mehrere verdrallte Teilströme FD1, FD2, FD3 abgezogen.

Andere Dralleinrichtungen sind auch möglich; es wird z. B. auf die DE 40 21 817 A1 verwiesen, bei der die Leiteinrichtungen nicht schaufelartig wie bei der Ausführungsform gemäß Fig. 10 und 11 ausgebildet sind, sondern nutenartig in der Rohrwandung. Ähnliche Nuten finden sich bei der Brennstoffeinspritzeinrichtung gemäß der EP 1 605 204 A2.

### Bezugszeichenliste

- 1: runde Mischerscheibe
- 1a: Luv - Seite der Scheibe
- 1b: Lee - Seite der Scheibe
- 2: Gasmengenstrom
- 2a: Gasmengenstrom, Teilstrom auf der Luv - Seite 1 a der Scheibe
- 2b: Gasmengenstrom, Teilstrom zur Lee - Seite 1b der Scheibe
- 3: Hufeisenwirbel und Wirbelschleppe
- 3a: Wirbelachse
- 3b: Außengrenze des Wirbels
- 4: Zufuhrrohr
- 4a: gerader Rohrabschnitt
- 4b: abgewinkelter Rohrabschnitt
- 4c: gekrümmter Austritt
- 5: Wandung des Rauchgaskanals K
- 6: Öffnung
- 7: verdrallter Fluidstrom
- 7a: Pfeile der Fluidströmung
- 8: 8-eckige Mischerscheibe
- 8a: Luv - Seite
- 8b: Leu-Seite
- 9: Zufuhrrohr
- 9a: gerader Rohrabschnitt
- 9b: abgewinkelter Rohrschnitt
- 9c: gekrümmter Austritt
- 10: verdrallter Fluidstrom
- 11: Staubschutzplatte
- AG: Axialgitter
- D: Durchmesser von Rohr 4,9
- DE: Dralleinrichtung
- F: Fluidstrom
- FD: verdrallter Fluidstrom
- G: Gehäuse
- GM: gemeinsames Gehäuse
- IK: Innenkreis
- K: Rauchgaskanal
- L: Leitschaufeln
- LF: Leitfläche
- M: Mitte der Scheiben 1,8
- R: Krümmungsradius der Aufweitung
- RG: Radialgitter
- RS: Rückströmung
- S: Spiralgehäuse

## Patentansprüche

1. Verfahren zum Vermischen mindestens eines Fluidstroms (F) mit einem großen Gasmengenstrom (2), insbesondere zum Einbringen eines Reduktionsmittels in ein Stickoxide enthaltendes Rauchgas,
bei dem der große Gasmengenstrom mindestens ein unter einem Winkel gegen seine Strömungsrichtung angeordnetes scheibenartig ausgebildetes Mischerelement (8; 1) auf seiner Anströmseite (8a; 1a) anströmt, an dem sich Strömungswirbel ausbilden (3), und bei dem der Fluidstrom dem Gasmengenstrom stromab des Mischerelements verdrallt zugemischt wird,
**dadurch gekennzeichnet,**
**dass** der verdrallte Fluidstrom (10; 7) auf einer Seite (8a; 1a / 8b; 1b) im wesentlichen senkrecht auf das Mischerelement (8; 1) und im wesentlichen auf die Mitte des Mischerelements (8; 1) gelenkt wird,
**dass** der Fluidstrom (10) auf die Abströmseite (8b) des Mischerelements (8) gelenkt wird oder der Fluidstrom (7) auf die Anströmseite (1a) des Mischerelement (1) mit einer im wesentlichen auf der Mitte des Mischerelements (1) vorgesehenen Öffnung (6) gelenkt wird, durch die der Fluidstrom (7) auf die Abströmseite (1b) des Mischerelements (1) austritt,
und **dass** das Fluid von der Mitte her entlang der Abströmseite (8b; 1b) in die Strömungswirbel (3) eintritt.

2. Vorrichtung zum Vermischen mindestens eines Fluidstroms (F) mit einem in einem Gaskanal strömenden großen Gasmengenstrom (2), insbesondere zum Einbringen eines Reduktionsmittels in ein Stickoxide enthaltendes Rauchgas,
mit mindestens einem in dem Gaskanal gehaltenen scheibenartig ausgebildeten Mischerelement (8; 1) mit Anströmseite (8a;1a) und Abströmseite (8b; 1b), das mit der Strömungsrichtung des Gasmengenstroms einen Winkel einschließt und an dem sich Strömungswirbel (3) ausbilden und mit einer rohrartigen Zumischeinrichtung (9; 4) für den Fluidstrom mit einer vor dem Fluidaustritt (9c; 4c) zugeordneten Dralleinrichtung (DE; RG; AG; S)
**dadurch gekennzeichnet,**
**dass** der gerundet ausgebildete Fluidaustritt (9c; 4c) der Zumischeinrichtung (9; 4) im wesentlichen senkrecht zu einer Seite (8b; 1b) und im wesentlichen auf die Mitte des Mischerelements (8; 1) ausgerichtet ist und
**dass** der Fluidaustritt (9c) auf der Abströmseite (8b) des Mischerelements (8) angeordnet ist oder der Fluidaustritt (4c) der Zumischeinrichtung (4) auf der Anströmseite (1b) des Mischerelements (1) angeordnet ist und einer im wesentlichen mittigen Öffnung (6) des Mischerelement (1) zugeordnet ist, aus der der verdrallte Fluidstrom (7) zur Abströmseite (1b) hin austritt.

3. Vorrichtung nach einem der Ansprüche 2,
**dadurch gekennzeichnet,**
**dass** die Mischerscheibe (1; 8) kreisförmig, elliptisch, oval, parabelförmig, rautenförmig, vieleckig oder dreieckförmig ausgebildet ist.

4. Vorrichtung nach Anspruch 3,
**dadurch gekennzeichnet,**
**dass** die Vieleckform eine symmetrisch strukturierte 8-Eckform, insbesondere regelmäßige 8-Eckform, oder eine Trapezform ist.

5. Vorrichtung nach einem der Ansprüche 2 bis 4,
**dadurch gekennzeichnet,**
**dass** die Mischerscheibe (1;8) unter einem Winkel (α) im Bereich zwischen 30° bis 90° zur Strömungsrichtung des Gasmengenstroms geneigt ist.

6. Vorrichtung nach einem der Ansprüche 2 bis 5,
**dadurch gekennzeichnet,**
**dass** vor oder in der Öffnung (6) eine Staubschützplatte (11) angeordnet ist.

7. Vorrichtung nach einem der Ansprüche 2 bis 6,
**dadurch gekennzeichnet,**
**dass** die Dralleinrichtung in dem Zufuhrrohr der Zumischeinrichtung angeordnet oder dem Zufuhrrohr vorgeschaltet ist.

8. Vorrichtung nach einem der Ansprüche 2 bis 6,
**dadurch gekennzeichnet,**
**dass** die Dralleinrichtung ausgewählt ist aus der Gruppe: Drallerzeuger mit Radialgitter (RG), Drallerzeuger mit Axialgitter (AG), Drallerzeuger mit tangentialem Zustrom (S).

## Claims

1. Method of mixing at least one fluid stream (F) with a large gas stream (2), especially for introducing a reducing agent into a flue gas that contains nitrogen oxides, with which the large gas stream flows against at least one disk-shaped mixer element (8; 1) on its inflow side (8a; 1a), which is disposed at an angle counter to the direction of flow of the large gas stream and at which eddy-type whirls (3) form, and with which the fluid stream is admixed with the gas stream downstream of the mixer element as a swirled stream,
**characterized in that**,
the swirled fluid stream (10; 7) is guided essentially perpendicularly onto one side (8a; 1a / 8b; 1b) of the mixer element and essentially onto the center of the mixer element on the discharge side of the mixer element,
the fluid stream (10) is guided onto the discharge side (8b) of the mixer. element (8) or the swirled fluid stream (7) is guided on to the inflow side (1a) of the mixer element (1) with an opening (6) provided essentially in the center of the mixer element (1), through which the fluid stream (7) exits onto the discharge side (1b) of the mixer element (1),
and the fluid enters the eddy-type whirls (3) from the center along the discharge side (8b;1b).

2. Apparatus for mixing at least one fluid stream (F) with a large gas stream (2) that flows in a gas duct, especially for introducing a reducing agent into a flue gas that contains nitrogen oxides, with at least one disk-shaped mixer element (8;1) held in the gas duct and having an inflow side (8a;1a) and a discharge side (8b; 1b), the mixer element forming an angle with the direction of flow of the gas stream and at which eddy-type whirls (3) form, and with a tubular admixing device (9;4) for the fluid stream, to which a swirling device (DE; RG; AG; S) located prior to the fluid outlet (9c; 4c) is associated,
**characterized in that**,
the rounded fluid outlet (9c; 4c) of the admixing device (9; 4) is oriented essentially perpendicular to one side (8b; 1b) and essentially onto the center of the mixer element (8; 1),
the fluid outlet (9c) is disposed on the discharge side (8b) of the mixer element (8) or the fluid outlet (4c) of the admixing device (4) is disposed on the inflow side (1b) of the mixer element and is associated with an essentially central opening (6) of the mixer element (1), out of which the swirled fluid stream (7) exits toward the discharge side (1b).

3. An apparatus according to one of the Claim 2, **characterized in that**, the mixer disk (1; 8) has a circular, elliptical, oval, parabolic, diamond, polygonal or triangular shape.

4. An apparatus according to Claim 3, **characterized in that**, the polygonal shape is a symmetrically shaped 8-cornered shape, in particular regular 8-cornered shape, or a trapezoidal shape.

5. An apparatus according to one of the Claims 2 to 4, **characterized in that**, the mixer disk (1; 8) is inclined relative to the direction of flow of the gas stream at an angle (α) in the range of between 30° to 90°.

6. An apparatus according to one of the Claims 2 to 5, **characterized in that**, a dust-protecting plate (11) is disposed ahead of or in the opening (6).

7. An apparatus according to one of the Claims 2 to 6, **characterized in that**, the swirl device is disposed in the supply conduit of the admixing device or is disposed upstream of the supply conduit.

8. An apparatus according to one of the Claims 2 to 6, **characterized in that**, the swirl device is selected from the group: swirl producer having radial grating (RG), swirl producer having axial grating (AG), swirl producer have tangential in-flow (S).

## Revendications

1. Procédé de mélange d'au moins un courant (F) de fluide à un grand courant (2) massique de gaz, notamment pour introduire un agent réducteur dans un gaz de fumée contenant des oxydes d'azote,
dans lequel le grand courant massique de gaz afflue sur la face (8a, 1a) d'afflux d'au moins un élément (8, 1) un mélangeur qui est disposé en faisant un angle avec le sens d'écoulement du courant, qui est constitué à la manière d'un disque et sur lequel se forme des tourbillons d'écoulement (3) et dans lequel le courant de fluide est mélangé en giration au courant massique de gaz en aval de l'élément mélangeur,
**caractérisé en ce que** l'on dirige le courant (10, 7), de fluide en giration sur une face (8a, 1a/8b, 1b) de l'élément mélangeur essentiellement perpendiculairement à l'élément mélangeur et essentiellement au milieu de l'élément mélangeur,
l'on dirige le courant (10) de fluide en giration sur la face (8b) de sortie de l'élément (8) mélangeur ou l'on dirige le courant (7) de fluide en giration sur la face (1a) d'afflux de l'élément (1) mélangeur par une ouverture (6) prévue essentiellement au milieu de l'élément (1) mélangeur, le courant (7) de fluide sortant sur la face (1b) de sortie de l'élément (1) mélangeur,
et le fluide entre depuis le milieu le long de la face (8b, 1b) de sortie dans les tourbillons (3) d'écoulement.

2. Dispositif de mélange d'au moins un courant (F) de fluide à un grand courant (2) massique de gaz passant dans un canal de gaz, notamment pour introduire un agent réducteur dans un gaz de fumée contenant des oxydes d'azote, comprenant au moins un élément (8, 1) mélangeur maintenu dans le canal de gaz, du type en disque ayant une face (8a, 1a) d'afflux et une face (8b, 1b) de sortie, qui forme un angle avec le sens d'écoulement du courant massique de gaz et auquel se forme des tourbillons (3) d'écoulement, et un dispositif (9, 4) tubulaire de mélange du courant de fluide ayant un dispositif (DE, RG, AG, S) de mise en giration associé et dispose avant de la sortie (9c, 4c) du fluide, **caractérisé en ce que** la sortie (9c, 4c) arrondie du fluide du dispositif (9, 4) de mélange est dirigée essentiellement perpendiculairement à une face (8b, 1b) et essentiellement au milieu de l'élément (8, 1) mélangeur,
la sortie (9c) du fluide est disposée sur la face (8b) de sortie de l'élément (8) mélangeur ou
la sortie (4c) arrondie du fluide du dispositif (4) de mélange est disposée sur la face (1b) d'afflux de l'élément (1) mélangeur et est associée à une ouverture (6) essentiellement au milieu de l'élément (1) mélangeur, de laquelle le courant (7) de fluide en giration sort en direction de la face (1b) de sortie.

3. Dispositif suivant la revendication2, **caractérisé en ce que** le disque (1, 8) mélangeur est circulaire, elliptique, ovale, parabolique en forme de losange, polygonale ou triangulaire.

4. Dispositif suivant la revendication 3, **caractérisé en ce que** la forme polygonale est un octogone structuré symétriquement, notamment un octogone régulier ou a une forme en trapèze.

5. Dispositif suivant l'une des revendications 2 à 4, **caractérisé en ce que** le disque (1, 8) mélangeur est incliné d'un angle α compris entre 30° et 90° par rapport au sens d'écoulement du courant massique de gaz.

6. Dispositif suivant l'une des revendications 2 à 5, **caractérisé en ce qu'**une plaque (11) de protection vis-à-vis de la poussière est disposée devant ou dans l'ouverture (6).

7. Dispositif suivant l'une des revendications 2 à 6, **caractérisé en ce que** le dispositif donnant de la giration est monté dans le tube d'entrée du dispositif de mélange où est en amont du tube d'entrée.

8. Dispositif suivant l'une des revendications 2 à 6, **caractérisé en ce que** le dispositif de mise en giration est choisi dans le groupe: générateur de tourbillons à grille radiale (RG), générateur de tourbillons à grille axiale (AG), générateur de tourbillons à courant affluent tangentiel (S).
